**Europäisches Patentamt**

**European Patent Office**

**Office européen des brevets**

(11) Veröffentlichungsnummer: **0 428 931 A2**

# EUROPÄISCHE PATENTANMELDUNG

(21) Anmeldenummer: 90121126.8

(22) Anmeldetag: 05.11.90

(51) Int. Cl.⁵: **G02B 6/28**, G02B 6/44, H02G 15/117

(30) Priorität: 13.11.89 DE 3937693

(43) Veröffentlichungstag der Anmeldung:
29.05.91 Patentblatt 91/22

(84) Benannte Vertragsstaaten:
**AT BE CH DE DK ES FR GB IT LI LU NL SE**

(71) Anmelder: **AEG KABEL Aktiengesellschaft**
**Bonnenbroicher Strasse 2-14**
**W-4050 Mönchengladbach 2(DE)**

(72) Erfinder: **Moers, Herbert**
**Hindenburgstrasse 59**
**W-4052 Korschenbroich 1(DE)**
Erfinder: **Delage, Peter**
**Schlossstrasse 9**
**W-4053 Jüchen 5(DE)**
Erfinder: **Hildebrandt, Hans-Georg, Dr.**
**Neuenhaus 16**
**W-5600 Wuppertal 12(DE)**
Erfinder: **Hög, Georg**
**Zeppelinstrasse 17**
**W-4050 Mönchengladbach 1(DE)**

(54) **Verfahren zum spleissfreien Anschliessen von Teilnehmern.**

(57) Bei einem Verfahren zum spleißfreien Anschließen von Teilnehmern eines Glasfaserbreitbandnetzes mit einem optischen Kabel, ist vorgesehen, daß die Endteilnehmer T1...TN dadurch angeschlossen werden, daß der Mantel (2) des optischen Kabels (1) in der Nähe des Endteilnehmers Tk aufgetrennt wird, daß ein optisches Element (4, 5) zur Versorgung eines Endteilnehmers Tk derart aus dem optischen Kabel (1) entnommen wird, daß dazu der von der Zentrale (Z) weiter entfernte Teil des optischen Elementes (5) zurückgeholt wird und daß der Endteilnehmer ohne Verbindungsstelle angeschlossen wird.

Figur 1

EP 0 428 931 A2

# VERFAHREN ZUM SPLEISSFREIEN ANSCHLIESSEN VON TEILNEHMERN

Die Erfindung betrifft ein Verfahren zum spleißfreien Anschließen von Teilnehmern nach dem Oberbegriff des Anspruchs 1. Bisher hatte man zum Anschließen von Teilnehmern an Breitband-kommunikationsnetze beispielsweise für jeden Teil-nehmer einen Richtkoppler vorgesehen. An der Spleißstelle tritt eine nicht unerhebliche Zusatzdämpfung in dem optischen Übertragungsweg auf. Außerdem ist eine Spleißstelle mechanisch nicht so zuverlässig wie die unverletzte Glasfaser.

Der Erfindung liegt die Aufgabe zugrunde, dem Teilnehmeranschlußbereich eine spleißfreie Verbindung vom Hauptkabel zu den einzelnen Teilnehmern zu schaffen. Diese Aufgabe wird nach der Erfindung durch die im Kennzeichen beschriebenen Merkmale des Anspruchs 1 gelöst. Weiterbildungen der Erfindung sind in den Unteransprüchen beschrieben.

Das Verfahren eignet sich besonders zur Instal-lation von Breitkommunikationsdiensten in Wohn-gebieten. Die Vorteile gegenüber dem Stand der Technik sind darin zu sehen, daß das Anschlußverfahren mit weniger Aufwand durchgeführt werden kann und die Anschlüsse eine hohe Zuverlässigkeit aufweisen.

Ein Ausführungsbeispiel der Erfindung wird nachstehend anhand der Zeichnung näher erläutert; dabei zeigt Fig. 1 schematisch ein optisches Kabel in verschiedenen Anschlußstadien, Fig. 2 eine Abzweigmuffe und Fig. 3 ein optisches Kabel im Querschnitt.

Das optische Kabel 1 verläuft im allgemeinen in einem Installationskanal an den Teilnehmern T1, T2, T3, .. Tn, vorbei. Der Mantel 2 des Kabels wird in der Nähe eines Teilnehmers Tk aufgetrennt und ein optisches Element 5 an der Trennstelle herausgeführt. Dabei wird an dem von der Zentrale entfernt gelegenen Ende des optischen Elements 5 gezogen, es bis zur Abzweigstelle 3 des Teilnehmers zurückgeholt und ihm in einem Stichkanal zugeführt.

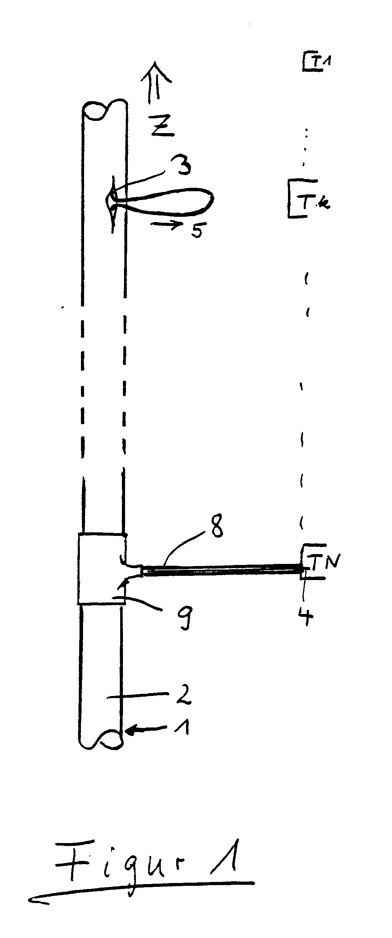

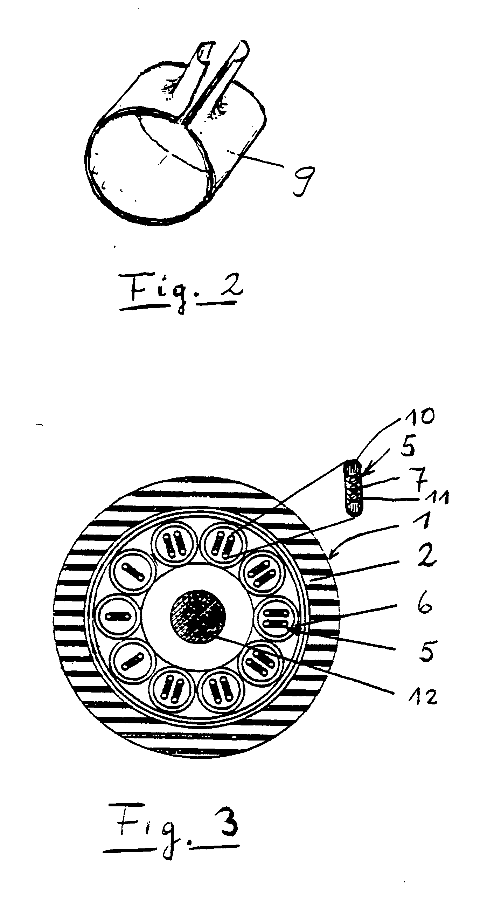

Anschließend wird der Hausanschluß zum Teilnehmer Tk hergestellt. Das optische Element kann entweder ohne weiteres in einem Kanal verlegt werden, oder es wird mittels eines Schlauches 8 umhüllt. Eine Muffe 9 kann die Abzweigstelle abdichten (s. Fig. 2). Das optische Element enthält eine Anzahl von Glasfasern, welche für den Hausanschluß benötigt werden. Vorzugsweise enthält das optische Element 5 drei optische Fasern in Form eines Bändchens (s. Fig. 3). Zusätzlich ist das optische Element 5 mit Zugentlastungselementen 10 und einem Schutzmantel 11 ausgerüstet. Die Zugentlastungselemente 10 sind nötig, damit beim Herausziehen des optischen Elementes 5 aus dem Kabel bzw. der Ader 6 keine Faserbrüche auftreten. Die optischen Fasern 7 werden mit den Teilnehmern verbunden. Am Orte des Teilnehmers können Multiplexer oder einfache Steckverbindungen eingesetzt werden.

Es ist besonders günstig, zunächst die letzten Teilnehmer anzuschließen, da vom Ende her die abzutrennenden und zurückzuführenden oder herauszuziehenden Längen zunächst sehr kurz sind. Durch die im Kabel evtl. entstandenen Öffnungen können die nicht benötigten Längen von den Enden her jeweils gekürzt werden. Auf diese Weise wird das Herausziehen der optischen Elemente erleichtert.

Nachdem das Herausziehen der optischen Elemente (z.B. 4, 5) zur Versorgung der Endteilnehmer T1 .. TN abgeschlossen ist, wird ein gefülltes Kabel wieder mit Füllmasse versehen, um die Längswasserdichtigkeit sicherzustellen. Die Füllmasse wird zweckmäßigerweise von der Stelle aus erfolgen, an der der Querschnitt des Kabels am größten ist; d.h. von dem Ende her, das von der Zentrale am weitesten entfernt ist. Zum Schluß wird das Kabel auch am Ende sorgfältig mit einer Abdichtung versehen.

Das Kabel kann ein Zentralelement 12 aufweisen, um das die Adern 6 mit großem Schlag von mindestens 500 cm verseilt sind. Weiterhin ist es günstig den Kabelmantel leicht so auftrennen zu können, daß ein optisches Element entnehmbar ist. Beispielsweise ist dafür ein Aufreißfaden im Ka-belmantel vorgesehen.

## Ansprüche

1. Verfahren zum spleißfreien Anschließen von Teilnehmern eines Glasfaserbreitbandnetzes mit einem optischen Kabel, **dadurch gekennzeichnet,** daß die Endteilnehmer T1...TN dadurch angeschlossen werden, daß der Mantel (2) des optischen Kabels (1) in der Nähe des Endteilnehmers Tk aufgetrennt wird, daß ein optisches Element (4, 5) zur Versorgung eines Endteilnehmers Tk derart aus dem optischen Kabel (1) entnommen wird, daß dazu der von der Zentrale (Z) weiter entfernte Teil des optischen Elementes (5) zurückgeholt wird und daß der Endteilnehmer ohne Verbindungsstelle angeschlossen wird.

2. Verfahren nach Anspruch 1, dadurch gekennzeichnet, daß jedes Kabelelement (5) für den ein-zelnen Teilnehmer in einen Schlauch (8) eingezogen wird.

3. Verfahren nach Anspruch 1 oder 2, dadurch gekennzeichnet, daß der Schlauch (8) mit dem optischen Kabel (1) mittels einer Übergangsmuffe (9) verschweißt wird.

4. Verfahren nach einem der Ansprüche 1 bis 3, dadurch gekennzeichnet, daß das optische Kabel bis zum letzten Teilnehmer TN verlegt wird, daß zunächst der letzte Teilnehmer mit einem optischen Element verbunden wird und daß dann die übrigen Teilnehmer in Richtung auf die Zentrale Z hin angeschlossen werden.

5. Verfahren nach einem der Ansprüche 1 bis 4, dadurch gekennzeichnet, daß nach Entfernen des optischen Elements (4, 5) anschließend die Trennstelle verschlossen wird.

6. Verfahren nach einem der Ansprüche 1 bis 5, dadurch gekennzeichnet, daß im Kabel (1) mehrere Adern (6) verseilt sind, aus denen die optischen Elemente (4, 5) herausgezogen werden.

7. Verfahren nach einem der Ansprüche 1 bis 6, dadurch gekennzeichnet, daß das Kabel (1) mittels eines Aufreißfadens aufgetrennt wird.

Figur 1

Fig. 2

Fig. 3